# EUROPEAN PATENT APPLICATION

(11) **EP 0 846 518 A2**
(43) Date of publication of application: **10.06.1998**
(21) Application number: 97309876.7
(22) Date of filing: 08.12.1997
(51) Int. Cl.: B23D 65/00

(54) **Method and apparatus for making saw blades**

(30) Priority: 07.12.1996 GB 9625494
(71) Applicant: Murray, David Ridley Victor, Albrighton, Wolverhampton WV7 3QX (GB)
(72) Inventor: Murray, David Ridley Victor, Albrighton, Wolverhampton WV7 3QX (GB)
(74) Representative: Swindell & Pearson

(57) **Abstract**

The apparatus (10) is used for simultaneously making two saw blades (12). A forming station (14) formed by rollers (16A,16B) receives a continuous strip (18) of blade material fed to the forming station (14) by rotation of the rollers (16). The rollers have recesses and projections which are complimentary to each other in order to cut and set saw teeth sequentially in the blades (12), by a substantially continuous operation.

## Description

The present invention relates to saw teeth and particularly to the formation of saw teeth on a saw blade.

A conventional saw blade such as a band saw consists of a long strip of material such as hard steel, along the edge of which a series of teeth are formed. The teeth are normally "set" by displacing them out of the plane of the strip, usually in alternate directions, or with a group of teeth set in one direction being followed by a group of teeth set in the opposite direction.

Forming teeth, particularly along a continuous blade such as a band saw, can be a complex and slow task which creates a considerable amount of waste material. The present invention seeks to address these problems.

According to the invention, there is provided apparatus for making a saw blade, comprising feed means operable to cause a continuous strip of blade material to be fed to a forming station at which teeth are sequentially formed therein in a substantially continuous operation.

The forming station may comprise rotatable members having a nip through which the strip passes, and being arranged to form teeth as the strip moves through the nip. The rotatable members may have nip-forming surfaces which are complementary in form and which interfit in use to apply a shearing action to the strip whereby to cut the teeth. The rotatable members may have further nip-forming surfaces which cause teeth formed in the strip to be set. The forming station is preferably operable to form a plurality of saw blades from a single strip and preferably operates to divide the strip lengthwise and form two saw blades from the divided lengths.

One of the rotatable members may have a circumferential recess, the other having a circumferential prominence which mates with the recess at the nip whereby to cut the strip therebetween to form a tooth. The edges of the recess and prominence are preferably shaped to cut saw teeth of a desired shape in the strip.

Each rotatable member may have prominent and recessed regions around its circumference, the members being arranged at a relative orientation such that prominences of each member mate with recesses of the other member at the nip, as the members rotate, whereby, in use, teeth formed in the strip are set to either side of the plane of the strip. Desirably the prominences and recesses alternate around each member, whereby to provide for teeth to be set alternately to both sides of the plane of the strip.

Preferably at least one of the rotatable members comprises a radially extending guide part which serves to guide the strip to the nip during use.

Alternatively one of the rotatable members may be replaced by a static member comprising appropriate formations for interaction with a rotatable member generally as described above to cut saw teeth.

The invention also provides a method of making a saw blade, in which a continuous strip of blade material is fed to a forming station at which successive teeth are formed sequentially therein in a substantially continuous operation.

Preferably the strip is fed to the nip of rotatable members arranged to form teeth as the strip moves through the nip. The rotatable members may have respective nip-forming surfaces which are complementary in form, and which interfit in use to apply a shearing action to the strip to thereby cut teeth. Preferably teeth formed in the strip are set at the forming station.

Preferably a plurality of saw blades is formed at the forming station from a single strip. Preferably the strip is divided lengthwise, and two saw blades are formed from the divided lengths.

Preferably the strip is fed between a rotatable member having a circumferential recess, and a rotatable member having a circumferential prominence which mates with the recess at the nip. The edges of the recess and prominence are preferably shaped to cut saw teeth of desired shape in the strip as the respective formations mate.

The strip may be fed between rotatable members having prominent and recessed regions around their circumference, arranged such that prominences of each member mate with recesses of the other member at the nip as the members rotate, whereby teeth are formed in the strip and set to either side of the plane of the strip. Desirably the prominences and recesses alternate around each member, whereby to provide for teeth to be set alternately to both sides of the plane of the strip.

Preferably the strip is guided to the nip by a radially extending guide part carried by one of the rotatable members.

Examples of the present invention will now be described in more detail, by way of example only, and with reference to the accompanying drawings, in which:
Fig. 1 is a schematic general perspective view of apparatus according to the invention in use;
Figs. 2a and 2b are enlarged perspective views of the circumferential surfaces of the rollers shown in Fig. 1;
Fig. 3 is a partial schematic section at III-III in Fig. 1, showing the nip of the rollers;
Fig. 4 shows a saw blade formed by the apparatus of Fig. 1; and
Fig. 5 shows an alternative form of roller surface for use in the apparatus of Fig. 1.

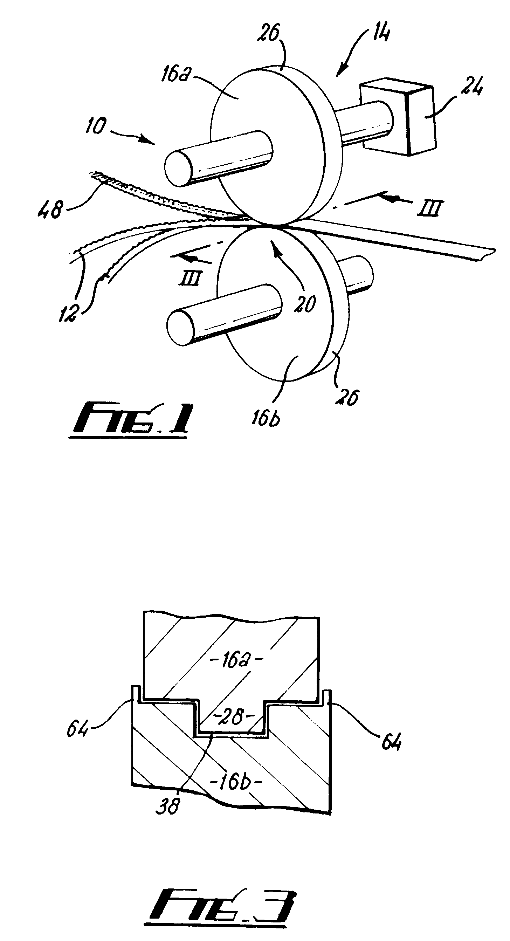

The apparatus 10 of Fig. 1 is used for simultaneously making two saw blades 12. A forming station 14 formed by rollers 16a,16b receives a continuous strip 18 of blade material fed to the forming station 14 by rotation of the rollers 16 in a manner to be described. The rollers 16 sequentially form successive teeth in the blades 12 by a substantially continuous operation.

In more detail, the rollers 16 have a nip at 20 between which the strip 18 locates. A drive motor 24 is used to drive one of the rollers 16, which draws the strip 18 through the nip 20. The strip 18 is formed into toothed saw blades 12 at the nip 20 by virtue of the form of the circumferential surfaces 26 of the rollers 16.

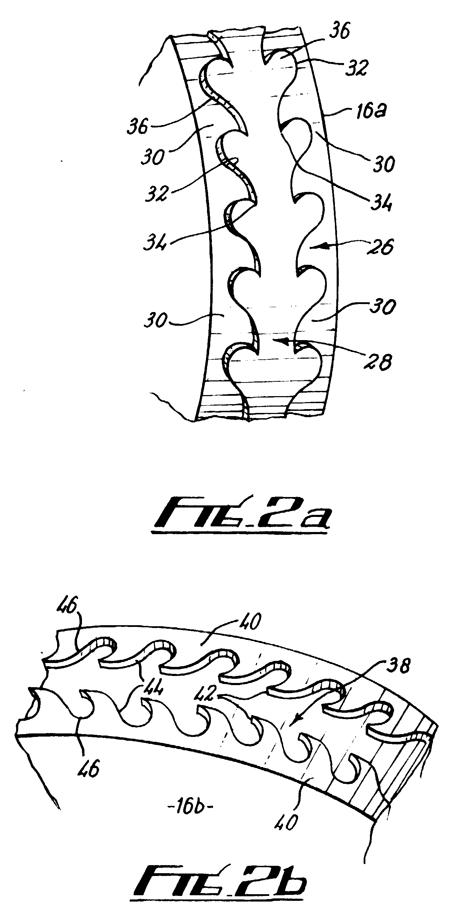

The surface 26a of the roller 16a is shown in more detail in Fig. 2a. A central prominence or land 28 extends around the complete circumference of the roller 16 and is bounded to either side by relatively depressed regions 30. The two edges 32 of the land 28 follow convoluted paths which correspond, when viewed radially, to the shape of the saw teeth to be produced. Consequently, the edges 32 include sharp concavities 34 corresponding to the tip of a saw tooth, and more smoothly curved regions 36 which correspond to the trailing edge of the saw teeth.

The surface 26b of the roller 16b is shown more clearly in Fig. 2b. A central channel 38 extends around the whole circumference of the roller 16b. This is bounded by two circumferential prominences or lands 40. The walls of the channel 38 follow a convoluted path which corresponds to the shape of the land 28, with sharp convexities 42 and curved regions 44, along the edges 46.

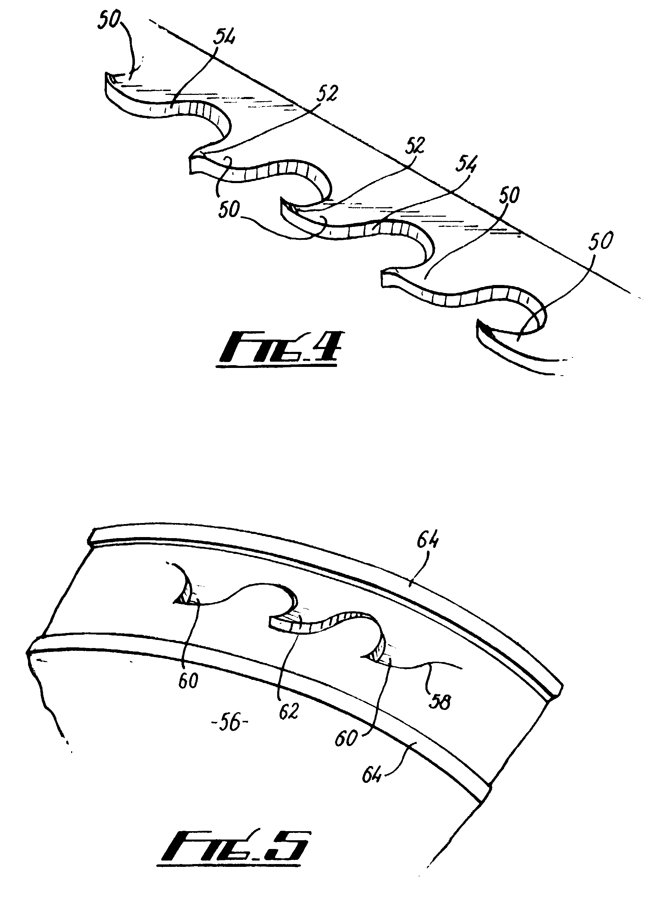

The land 28 and channel 38 (or conversely, the lands 40 and depressed regions 30) are complementary in form so that the two rollers 16 can be brought together in the manner shown in Fig. 1, to form a nip in which the land 28 is within the channel 38. This mated condition is illustrated in Fig. 3.

It can be seen from Fig. 3 that a flat strip 18 fed to the nip 20 cannot remain flat as it passes between the rollers 16 (through the forming station 14). The interfitment of the surfaces 26 will cause the strip 18 to deform. In particular, the land 28 will shear the strip against the edge 46 of the lands 40, thus cutting the strip along its length and along a line corresponding to the shapes of the edges 32,46. The shape of the teeth so formed is therefore dictated by the shape of the edges 32,46.

It will be apparent from Fig. 3 that two cuts will be made in the strip 18 and as a result, two blades 12 are produced, with a central scrap strip 48.

Fig. 4 shows one of the saw blades so formed. A line of teeth 50 extends along one edge of the blade 12 and each tooth has a point 52 followed by a curved trailing edge 54.

Roller surfaces 26 as shown in Figs. 2a and 2b would produce teeth which are not set. Teeth could be set as a secondary operation by deforming alternate teeth out of the plane of the blade 12, in alternate directions, or a group of teeth could be deformed to one side of the blade, followed by a similar group being deformed to the other side.

However, it is desirable to avoid the requirement for a second step in the forming process and this aim can be achieved by rollers of the form shown in Fig. 5. Fig. 5 shows a roller 56 along which a line 58 is visible, and has generally the same shape as the edges 32,46 (when viewed radially). However, whereas the rollers 16 use a central region which is always more prominent or more recessed than the peripheral regions, the roller 56 is formed so that regions 62, in which the region to one side of the line is more prominent than the peripheral region, alternate with regions 60 in which the reverse relationship applies. In this embodiment of the invention, two identical rollers 56 would be used at the forming station 14, and would be set with a relative angular position such that the prominent regions 62 of each roller 56 mate with recessed regions 60 of the other roller 56.

It will be readily appreciated that in this arrangement, in addition to cutting the saw teeth as the strip 18 passes through the nip of the rollers 56, those teeth will also be set alternately to either side of the plane of the blade 12. It is to be appreciated that groups of teeth set to one side and followed by a group set to the other side can readily be formed by appropriate modification of the surface of the rollers 56.

Fig. 5 shows a circumferential flange 64 around the roller 56, which may be at one or both edges of the roller 56 and helps guide the strip 18 to the nip 20. Guide flanges of this nature could be incorporated into the rollers 16.

It will be apparent from the above description that the process described can operate substantially continuously. That is, the rollers can be rotated continuously to feed the strip 18 until teeth have been formed along the whole length of the strip, in essence without limit on the length of the strip.

It will be readily apparent that many variations and modifications can be made to the apparatus described above without departing from the scope of the present invention. In particular, many other shapes and forms of saw tooth could readily be formed by appropriate modification of the roller surfaces. It may be possible in some circumstances to form more than two blades from a single strip. Alternatively, it may be desirable to form a single saw blade.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Apparatus for making a saw blade, comprising feed means operable to cause a continuous strip of blade material to be fed to a forming station at which teeth are sequentially formed therein in a substantially continuous operation.

2. Apparatus according to Claim 1, wherein the forming station comprises rotatable members having a nip through which the strip passes, and being arranged to form teeth as the strip moves through the nip.

3. Apparatus according to Claim 2, wherein the rotatable members have nip-forming surfaces which are complementary from the teeth.

4. Apparatus according to Claim 3, wherein the nip-forming surfaces apply a shearing action to the strip whereby to cut the teeth.

5. Apparatus according to any of Claims 2 to 4, wherein the rotatable members have further nip-forming surfaces which cause teeth formed in the strip to be set.

6. Apparatus according to any of Claims 2 to 5, wherein the forming station is operable to form a plurality of saw blades from a single strip.

7. Apparatus according to any of Claims 2 to 6, wherein the forming station operates to divide the strip lengthwise and form two saw blades from the divided lengths.

8. Apparatus according to any of Claims 2 to 7, wherein one of the rotatable members has a circumferential recess, the other having a circumferential prominence which mates with the recess at the nip whereby to cut the strip therebetween to form a tooth.

9. Apparatus according to Claim 8, wherein the edges of the recess and prominence are shaped to cut saw teeth of a desired shape in the strip.

10. Apparatus according to any of Claims 2 to 9, wherein each rotatable member has prominent and recessed regions around its circumference, the members being arranged at a relative orientation such that prominences of each member mate with recesses of the other member at the nip, as the members rotate, whereby, in use, teeth formed in the strip are set to either side of the plane of the strip.

11. Apparatus according to Claim 10, wherein the prominences and recesses alternate around each member, whereby to provide for teeth to be set alternately to both sides of the plane of the strip.

12. Apparatus according to any of Claims 2 to 11, wherein at least one of the rotatable members comprises a radially extending guide part which serves to guide the strip to the nip during use.

13. Apparatus according to any of Claims 1 to 12, wherein the forming station comprises a rotatable member and a static member comprising appropriate formations for interaction with the rotatable member to cut saw teeth.

14. A method of making a saw blade, in which a continuous strip of blade material is fed to a forming station at which successive teeth are formed sequentially therein in a substantially continuous operation.

15. A method according to Claim 14, wherein the strip is fed to the nip of rotatable members arranged to form teeth as the strip moves through the nip.

16. A method according to Claim 15, wherein the rotatable members have respective nip-forming surfaces which are complementary in form, and which interfit in use to form teeth.

17. A method according to Claim 16, wherein the rotatable members apply a shearing action to the strip to thereby cut teeth.

18. A method according to any of Claims 14 to 17, wherein teeth formed in the strip are set at the forming station.

19. A method according to any of Claims 14 to 18, wherein a plurality of saw blades is formed at the forming station from a single strip.

20. A method according to any of Claims 14 to 19, wherein the strip is divided lengthwise, and two saw blades are formed from the divided lengths.

21. A method according to any of Claims 14 to 20, wherein the strip is fed between a rotatable member having a circumferential recess, and a rotatable member having a circumferential prominence which mates with the recess at the nip.

22. A method according to Claim 21, wherein the edges of the recess and prominence are shaped to cut saw teeth of desired shape in the strip as the respective formations mate.

23. A method according to any of Claims 15 to 22, wherein the strip is fed between rotatable members having prominent and recessed regions around their circumference, arranged such that prominences of each member mate with recesses of the other member at the nip as the members rotate, whereby teeth are formed in the strip and set to either side of the plane of the strip.

24. A method according to Claim 23, wherein the prominences and recesses alternate around each member, whereby to provide for teeth to be set alternately to both sides of the plane of the strip.

25. A method according to any of Claims 15 to 24, wherein the strip is guided to the nip by a radially extending guide part carried by one of the rotatable members.

26. Any novel subject matter or combination including novel subject matter disclosed, whether or not within the scope of or relating to the same invention as any of the preceding claims.
